# EUROPEAN PATENT APPLICATION

(11) **EP 2 993 086 A1**
(43) Date of publication of application: **09.03.2016**
(21) Application number: 15175982.6
(22) Date of filing: 09.07.2015
(51) Int. Cl.: B60R 13/02, B29C 44/02, B29C 44/56, B29C 63/02, B29C 65/48, B29C 69/00, B29L 31/30

(54) **MANUFACTURE OF AN ARTICLE HAVING A DECORATIVE COVERING OVERLYING AN INJECTION MOLDED SUBSTRATE HAVING A CELLULAR STRUCTURE**

(30) Priority: 14.08.2014 US 201414460197
(71) Applicant: International Automotive Components Group North America, Inc., Southfield MI 48034 (US)
(72) Inventor: Hjortsberg, Frederick L., Perrysburg, OH Ohio 43551-2551 (US); Ryntz, Rose A., Clinton Township, MI Michigan 48035 (US); Mehdian, Behrooz, Northville, MI Michigan 48167 (US)
(74) Representative: Liesegang, Eva

(57) **Abstract**

A method of forming an article is provided, comprising providing a decorative covering; providing an injection molded substrate, the substrate formed of at least one thermoplastic polymer, the thermoplastic polymer having a cellular structure formed by a gas expelled into the thermoplastic polymer by a chemical blowing agent mixed with the thermoplastic polymer during injection molding, wherein an upper surface of the substrate includes surface defects including surface voids; applying a hot-melt adhesive to at least one of an lower surface of the decorative covering and the upper surface of the substrate; bonding the decorative covering and the injection molded foamed substrate with the adhesive; and wherein the adhesive is applied such that presence of the surface voids in the upper surface of the substrate do not appear on an upper surface of the skin layer after the decorative article is formed.

## Description

### FIELD

The present disclosure relates to the manufacture of a decorative article, particularly functioning as an interior trim member of a motor vehicle, having a decorative covering overlying an injection molded substrate having a cellular structure.

### BACKGROUND

U.S. Patent No. 8,062,451 discloses application of an extruded film to an injection molded part which is formed from an amorphous or semi-crystalline thermoplastic resin. Examples of such resins include thermoplastic olefin resin (TPO).

The part is injection molded from either solid TPO, or from mechanically or chemically foamed TPO. After the injection molded part is formed, the part is removed from the mold after it has cooled. The cooled part is then moved to a holding area where the foaming gas, in the case of the foamed TPO, is allowed to vent from the part for a period of time such that the part is "degassed" before being decorated with a film in the manufacturing process. As set forth by the '451 Patent, degassing is important to assure adhesion and is particularly important with structural foam parts. However, the degassing time of the part requires an inventory of parts to be stored until the part has been adequately degassed, which increases manufacturing costs.

Thereafter, a multi-layer heated film is bonded directly to the part, without need for an adhesive, using a thermo forming operation. A backing layer of the decorative film is taught to act as a bonding agent to the molded part, as well as act as a leveling float in which minor surface contaminants and part imperfections, particularly dust, are enveloped and hidden by the backing layer of the heated film. However, the '451 Patent makes no mention of eliminating surface imperfections larger than mere dust, such as pinholes and other voids.

What is needed is a manufacturing process and article which may eliminate the need to degas injection molded parts which make use of a chemical blowing agent, as well as a process and product which conceals surface defects in the injection molded part, such as pinholes and other voids, when the part is covered with a decorative covering.

### SUMMARY

The present disclosure provides articles having a decorative covering overlying an injection molded substrate having a cellular structure produced by a chemical blowing agent, as well as manufacturing processes therefore. The decorative covering may be bonded to the injection molded substrate with a bond strength which reduces or eliminates prolonged degassing time of the substrate prior to use. Furthermore, the decorative covering may be bonded to the injection molded substrate without the appearance of surface defects, particularly pinholes and other voids, in the substrate, arising from use of the chemical blowing agent, appearing on the outer surface of the decorative article.

According to one embodiment of the present disclosure, a method of forming a decorative article is provided, with the method comprising providing a decorative covering, the decorative covering comprising a skin layer and a cushion foam layer; providing an injection molded foamed substrate, the substrate formed of at least one thermoplastic polymer, the thermoplastic polymer having a cellular structure formed by a gas expelled into the thermoplastic polymer by a chemical blowing agent mixed with the thermoplastic polymer during injection molding, wherein an upper surface of the substrate includes surface defects including surface voids; providing a hot-melt adhesive between a lower surface of the decorative covering and the upper surface of the substrate; bonding the decorative covering and the injection molded foamed substrate with the adhesive; and wherein the adhesive is applied between the lower surface of the decorative covering and the upper surface of the substrate such that the surface voids are at least partially filled with the adhesive and the adhesive provides a bonding surface to bond with the substrate.

### FIGURES

The above-mentioned and other features of this disclosure, and the manner of attaining them, will become more apparent and better understood by reference to the following description of embodiments described herein taken in conjunction with the accompanying drawings, wherein:
FIG. 1 is a cross-sectional side view of an exemplary decorative covering according to the present disclosure;
FIG. 2 is a cross-sectional side view of an exemplary decorative article with a decorative covering and substrate according to the present disclosure;
FIGS. 3-5 illustrate a method of manufacturing a substrate for the decorative article according to the present disclosure;
FIG. 6 is a close up cross-sectional side view of the substrate bounded by circle 21 of FIG. 5 showing surface defects (voids) in the substrate;
FIG. 7 is a cross-sectional side view of the decorative covering with an adhesive layer within a heating apparatus;
FIG. 8 is a cross-sectional side view of the decorative covering with the adhesive layer and a substrate prior to being bonded to one another in a thermoforming (vacuum) operation;
FIG. 9 is a cross-sectional side view of the decorative covering and substrate after to being bonded to one another in a thermoforming (vacuum) operation to form the decorative article;
FIG. 9A is a close up cross-sectional side view of the decorative covering an substrate bounded by circle 25 of FIG. 9 showing surface defects in the substrate which have been completely filled with adhesive;
FIG. 10 is a cross-sectional side view of the decorative covering within a heating apparatus;
FIG. 11 is a cross-sectional side view of the decorative covering and a substrate with an adhesive layer prior to being bonded to one another in a thermoforming (vacuum) operation;
FIG. 11A is a close up cross-sectional side view of the substrate bounded by circle 27 of FIG. 11 showing surface defects in the substrate which have been completely filled with adhesive; and
FIG. 12 is a cross-sectional side view of the decorative covering and substrate after to being bonded to one another in a thermoforming (vacuum) operation to form the decorative article.

### DETAILED DESCRIPTION

It may be appreciated that the present disclosure is not limited in its application to the details of construction and the arrangement of components set forth in the following description or illustrated in the drawings. The invention(s) herein may be capable of other embodiments and of being practiced or being carried out in various ways. Also, it may be appreciated that the phraseology and terminology used herein is for the purpose of description and should not be regarded as limiting as such may be understood by one of skill in the art.

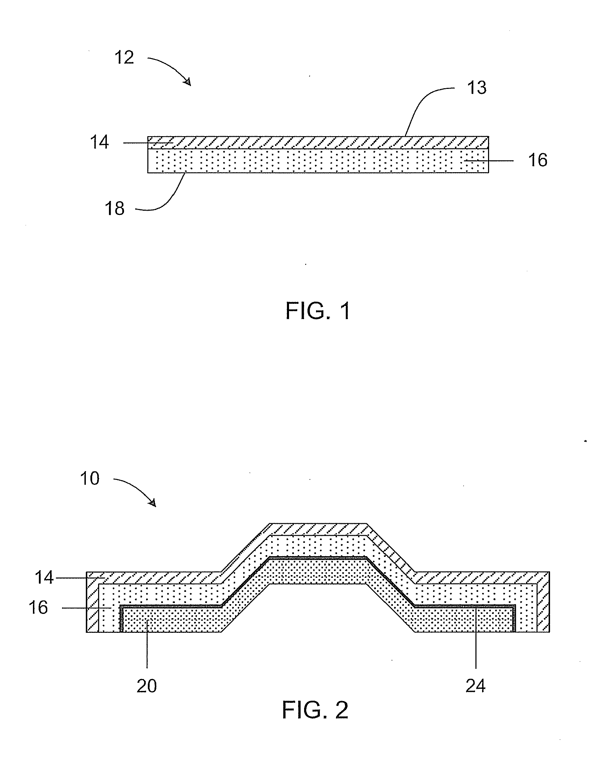

Referring now to the figures, FIGS. 1 and 2 shows a decorative covering 12 which may use used to manufacture a motor vehicle interior trim decorative article 10 according to the present disclosure, such as an interior door trim panel. As shown, decorative covering 12 comprises a skin layer 14 which is bonded to a resilient cushion foam (cellular) layer 16, such as by laminating. As explained in greater detail below, decorative covering 12 is bonded to a substrate 20 during manufacture of decorative article 10.

Decorative covering 12 may be cut into blanks from a continuous sheet of roll-stock (which also may be referred to as sheet-stock) to provide a planar sheet of material as shown in FIG. 1.

Skin layer 14 may be formed of one or more resilient synthetic polymers, which may be a thermoplastic or thermoset. The group of thermoplastic polymers may include plasticized polyvinyl chloride (PVC), thermoplastic urethane (TPU), thermoplastic olefin (TPO) elastomers, polyvinyl chloride acrylonitrile-butadiene-styrene (PVC-ABS), acrylonitrile-styrene-acrylic (ASA), blended elastomeric thermoplastic polymers and thermoplastic polyolefins (ETP-TPO). The group of thermoset polymers may include polyurethane which is cross-linked.

Skin layer 14 may have a thickness in a range of 0.1 mm to 1.0 mm. A clearcoat layer (not shown), which may also be formed of polyurethane, may be applied to the upper (front) surface 13 of the skin layer 14. Upper (front) surface 13 may include a leather simulated grain or be otherwise textured, or alternatively be untextured/ungrained.

Cushion foam layer 16 may also be formed of one or more resilient synthetic polymers, which may be a thermoplastic or thermoset. The group of thermoplastic polymers may include plasticized polyvinyl chloride (PVC), thermoplastic urethane (TPU), and thermoplastic olefin (TPO). The group of thermoset polymers may include polyurethane which is cross-linked.

Cushion foam layer 16 may have a thickness in a range of 1.0 mm to 2.5 mm. When formed of polyvinyl chloride foam, cushion foam layer 16 may have a density in a range of 0.4-0.7 g/cc (grams/cubic centimeter). Polyolefin foam, such as polypropylene foam, may have a lower density in a range of 0.03-0.1 g/cc, and may also be understood as a closed-cell foam. In order to better ensure the low density foam provides suitable compression and heat resistance, the polyolefin foam may be cross-linked.

The skin layer 14 and cushion foam layer 16 may be joined to one another by bonding, particularly by laminating. For example, by extruding the skin layer 14 and, while the skin layer 14 remains heated, passing the skin layer 14 through a lamination roll with the cushion foam layer 16. The skin layer 14 and cushion foam layer 16 may be understood to be generally impermeable to air transmission there through.

The skin layer 14 and the cushion foam layer 16 may be directly bonded to one another with or without use of a separate adhesive and/or adhesion promoter therebetween. If an adhesive and/or adhesion promoter is utilized, such may be applied to the cushion foam layer 16 prior to being laminated with the skin layer 14.

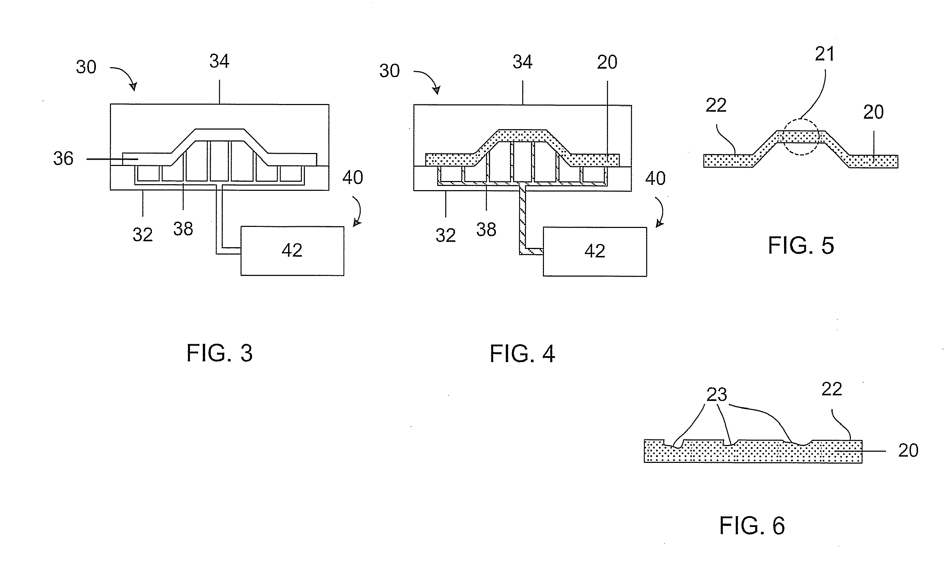

Referring now to FIGS. 3-5, there is shown an injection mold 30 to form substrate 20 according to the present disclosure. As shown, injection mold 30 comprises a first mold half 32 and a second mold half 34 which form cavity 36 to form substrate 20. As shown, first mold half 32 includes a hot runner 38 which delivers a molten polymer composition to mold cavity 36 from injection unit 42 of injection molding machine 40.

The substrate 20 may be formed of a polymer composition having a flexural modulus as measured in accordance with ASTM D-790-10 of at least 150,000 psi. at room temperature (23 °C) in order for substrate 20 to provide sufficient rigidity to support article 10. More particularly, the substrate 20 may have a flexural modulus as measured in accordance with ASTM D-790-10 in a range of 150,000 - 400,000 psi. at 23 °C.

In addition to providing sufficient rigidity for substrate 20 of article 10, the composition for substrate 20 should also provide suitable heat resistance. As such, the substrate 20 may be formed of a polymer composition having a heat distortion temperature as measured in accordance with ASTM D-648-07 of at least 82 °C at 264 psi. More particularly, the substrate 20 may have a heat distortion temperature as measured in accordance with ASTM D-648-07 in a range of 82 - 110 °C at 264 psi.

The polymer composition may comprise a thermoplastic polymer such as polypropylene (PP), acrylonitrile-butadiene-styrene (ABS), polycarbonate (PC), polycarbonate/acrylonitrile-butadiene-styrene (PC/ABS) or polyphenylene oxide (PPO).

In addition, the polymer composition for the substrate 20 may include one or more chemical blowing agents which decompose during the injection molding process to produce a gas such that the substrate 20 will be formed with a cellular (foamed) structure. In this manner, the weight of the substrate 20 may be reduced.

The chemical blowing agent may be either endothermic exothermic, or a combination (mixture) thereof, and may be mixed with a carrier before being introduced to the injection molding process. Exemplary chemical blowing agents may include azobisformamide, azodicarbonamide, azobisisobutyronitrile, sodium borohydride and sodium bicarbonate. The blowing agent may also comprise an alkaline earth metal carbonate and an acid as disclosed in U.S. Patent Application Publication No. 2011/0263734 entitled "Blowing Agents Formed From Nanoparticles of Carbonates," which is hereby incorporated by reference in its entirety.

During processing, the chemical blowing agent may be understood to decompose within the substrate composition while it is in melt phase of processing to develop a suitable cell structure in the molded substrate 20. As compared to use of the polymer composition molded as a solid, i.e. no cellular structure, the chemical blowing agent may reduce the molded density, and hence the weight of the substrate 20, in a range of 5-30%. Thus, for a polymer composition having a solid density of 1-1.1 g/cc, the density may be reduced to 0.7 g/cc to 0.95 g/cc.

However, while use of a chemical blowing may provide weigh reduction, use of a chemical blowing agent may be understood to decrease the surface quality of the substrate 20. As shown by FIG. 6, the upper (front) surface 22 of the substrate 20 may include voids 23 arising from use of the chemical blowing agent. The voids 23 may have a size in a range of 50 µm to 250 µm and more particularly 80 µm to 200 µm.

Furthermore, with use of a chemical blowing agent, once the substrate 20 is formed and demolded, gas produced by the chemical blowing agent in the core of the substrate 20 (what may be understood as the internal gas pressure) may be at a pressure greater than atmospheric pressure. As a result of the internal gas pressure of the substrate 20 being greater than the surrounding atmospheric pressure, the gas within the substrate 20 may attempt to migrate through the substrate 20 in order to reach equilibrium with the surrounding (ambient) atmospheric pressure.

As such, when the decorative impermeable covering 12 is bonded to the upper (front) surface 22 of the substrate 20 before the substrate 20 has degassed, it is not possible for the gas to freely migrate from the upper (front) surface 22 of the substrate 20. As a result, if the bond strength between the decorative covering 12 does not overcome the internal gas pressure of the substrate 20 for the level of blowing agent utilized, gas blisters may develop between the decorative covering 12 and the substrate 20 after forming decorative article 10.

In order to address the foregoing obstacles, after the substrate 20 is molded, decorative covering 12 may be bonded to the substrate 20 using the following embodiments of the disclosure.

In one particular embodiment of the present disclosure, the decorative covering 12 may comprise a bilaminate of skin layer 12 and foam layer 16. Skin layer 12 may be formed of ungrained polyvinyl chloride (PVC) having a thickness of 0.6 mm, while the foam layer 16 may be formed of cross-linked polypropylene foam having a thickness of 2.6 mm and a density of 0.05 g/cc. More specifically, the decorative covering 12 may be obtained the Haartz corporation under the designation CD391 and exhibit the following physical properties as shown in Table 1

**Table 1 - Decorative Covering Physical Properties**

| | |
|---|---|
| Percent Elongation @ Yield, machine direction, ASTMD412-06a | 300% - 500% |
| Percent Elongation @ Yield, transverse (cross) machine direction, ASTMD412-06a | 375% - 650% |
| Tear Strength, machine direction, ASTM D1004-09 | 125 N/cm - 190 N/cm |
| Tear Strength, transverse (cross) machine direction, ASTM D1004-09 | 115 N/cm - 200 N/cm |

The substrate 20 may be injection molded, with a nominal wall thickness of 2.5 mm, from a polymer composition which has been foamed with a chemical blowing agent to provide a cellular structure. More particularly, the polymer composition may comprise acrylonitrile-butadiene-styrene having an unfoamed density of 1.04 g/cc to 1.05 g/cc, and a molded foamed density in a range of 0.92 g/cc to 0.99 g/cc (ASTM D792-08). Even more particularly, the acrylonitrile-butadiene-styrene may be from Styron LLC and have the product designation Magnum ABS 3325 MT having a melt flow rate of 2.5 - 3.1 g/10 min (ASTM D1238-13, 230°C/3.8 kg), as well as the following physical and injection molding processing properties in Tables 2 and 3, respectively.

**Table 2 - Substrate Physical Properties**

| Magnum ABS 3325 MT | Without blowing agent | With blowing agent |
|---|---|---|
| Specific Gravity (g/cm³) | 1.04 | 0.97 |
| Melt Flow Rate (g/10 minutes) ASTM D1238-13, 260°C, 5.0 kg load | 20 | 17 |
| Flexural Modulus (MPa) ASTM D790-10 | 34 | 30 |
| Tensile Strength (MPa) ASTM D638-10 | 32 | 30 |

**Table 3 - Injection Molding Process Conditions**

| Injection Molding Conditions | |
|---|---|
| Rear Temp. | 224 °C to 274 °C |
| Middle Temp. | 245 °C to 295 °C |
| Front Temp. | 245 °C to 305 °C |
| Nozzle Temp. | 245 °C to 300 °C |
| Processing Temp. | 245 °C to 295 °C |
| Mold Temp. | 38 °C to 66 °C |
| Injection Pressure, pack | 850 to 1,150 psi. |
| Injection Pressure, hold | 150 to 350 psi |

The chemical blowing agent may be an endothermic blowing agent from Polyfil Corp. having the product designation Ecocell, which may be understood as being an alkaline earth metal carbonate and an acid as disclosed in U.S. Patent Application Publication No. 2011/0263734 entitled "Blowing Agents Formed From Nanoparticles of Carbonates," which is hereby incorporated by reference in its entirety. The Ecocell may be provided as a 50%-active pellet concentrate which includes nanoparticles of carbonates which react to generate carbon dioxide gas. The nanoparticle size of the active ingredient may particularly be able to produce a cellular foam structure having an cell size in a range of 50 µm to 250 µm and more particularly 80 µm to 200 µm, in the acrylonitrile-butadiene-styrene terpolymer as well as be dispersed more uniformly than particles of larger size to provide a more uniform homogenous melt when mixed with the acrylonitrile-butadiene-styrene.

Before molding, the polymer composition may comprise 98-99% by weight of the acrylonitrile-butadiene-styrene and 1-2% by weight of the chemical blowing agent. The acrylonitrile-butadiene-styrene and the chemical blowing agent may be dry mixed with one another in the hopper of the injection molding machine.

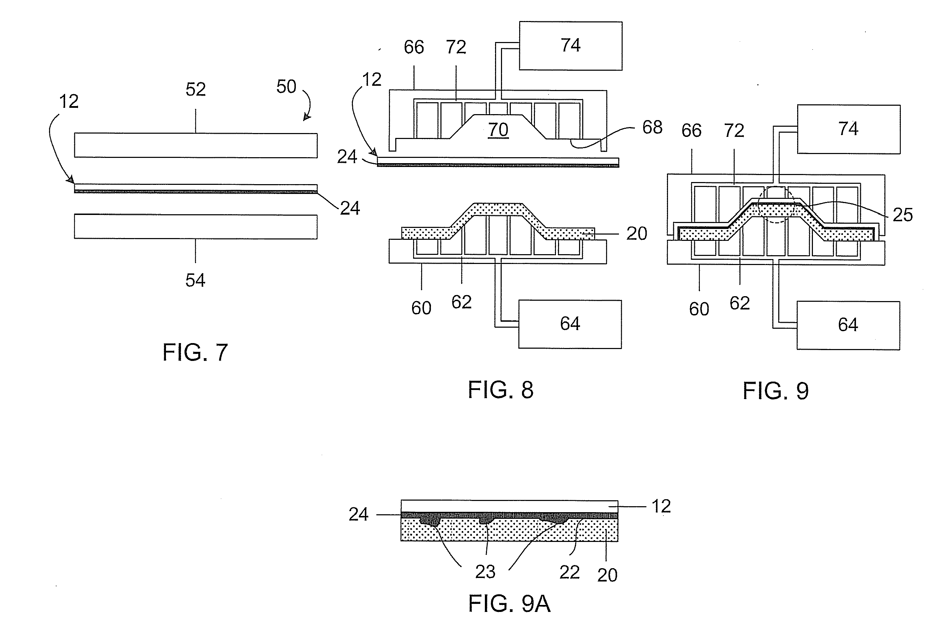

In one embodiment of the disclosure, as shown in FIG. 7, the decorative covering 12 is coated with an adhesive layer 24 to bond the decorative covering 12 to the substrate 20. The adhesive layer 24 may particularly be a solvent-free hot-melt adhesive. More particularly, the hot-melt adhesive may comprise a reactive (moisture cure) polyurethane hot-melt adhesive from H.B. Fuller/Forbo having the product designation 2U464-IN.

2U464-1N is a single component, fully reactive hot melt adhesive that cross-links through chemical reaction with moisture found in surrounding air and substrates, to produce a thermoset adhesive. Application temperature may range from 250 °F to 300 °F and more particularly 275 °F to 280 °F. The adhesive has a viscosity of 60,000 to 75,000 cps @ 250 °F. Green strength in 15 seconds after bonding is 100 to 120 psi, and cure rate is 60-90% in 24 hours.

The adhesive layer 24 is applied to the decorative covering 12 by the hot-melt adhesive being located in a heated trough (not shown). From the trough, the lower (rear) surface 18 of the cushion foam layer 16 is coated with the adhesive layer 24. More particularly, the decorative covering 12 is fed through an adhesive coated lower roll and a mechanically driven upper roll. The lower roll imparts a uniform adhesive coating onto the lower (rear) surface 18 of the cushion foam layer 16. The gap between the rolls establishes adhesive application density.

The adhesive layer 24 may be applied to the lower surface 18 of the decorative covering 12 as a heated liquid melt by coating the surface 18 at an amount of at least 60 g/sqm (grams/square meter), and more particularly in a range of 60-120 g/sqm, and even more particularly in a range of 60-100 g/sqm. The adhesive layer 24 should be applied in an amount suitable to at least partially fill, and preferably completely fill, surface voids 23 (e.g. pinholes, craters) arising in the upper (front) surface 22 of the substrate 20, due to use of the chemical blowing agent, as such will inhibit the defects from reading through and being visible on the skin layer 14 after the decorative article 10 is formed, as well as provide a suitable bond strength between the decorative covering 12 and the substrate 20 which inhibits blisters from forming between the decorative covering 12 and the substrate 20 due to release of internal gas pressure from within the substrate 20 created from the release of gas by the blowing agent. Without being bound to a particular theory, the use of a hot-melt adhesive may allow the thickness of the adhesive layer 24 to vary and flow into the surface voids 23 and fill the voids.

In other embodiments, rather than being applied by roll coating, the adhesive may be spray applied, such as a scatter spray.

As shown in FIG. 7, the decorative covering 12 coated with the adhesive layer 24 may be heated between opposing heating elements 52, 54 of heater 50, particularly to a temperature of 160 °C (320 °F). Simultaneously, the substrate 20 may be placed on first forming (male) mandrel 60 which supports the substrate 20 and inhibits deformation of the substrate 20 during formation of the decorative covering 12 thereon. First forming mandrel 60 may be understood as a thermoforming/vacuum-forming mandrel and may heat the substrate 20 as may be required for use of the adhesive.

First forming mandrel 60 may further include a plurality of vacuum passages 62 which are in communication with a vacuum chamber 64. Substrate 20 may include vacuum holes (not shown) formed therein which enable vacuum from the vacuum passages 62 to be drawn through the substrate 20. After being placed on support mandrel 60, the substrate may be heated to a temperature of 60 °C (140 °F).

As shown in FIG. 8, once the decorative covering 12 has been adequately heated, the decorative covering 12 may be located over substrate 20 between first forming (male) mandrel 60 and opposing second forming (female) mandrel 66. Second forming mandrel 66 may include a textured surface 68, which may include a texture in the form of a leather grain. The textured surface 68 may be used to form a texture, such as a leather grain, into the upper (front) surface 13 of skin layer 14, which may be initially untextured.

In addition to forming a texture into the upper (front) surface 13 of skin layer 14, the second forming mandrel 66 may be used to press the decorative covering 12, adhesive layer 24 and substrate 20 together to increase the bonding of the decorative covering 12 and the substrate 20 to one another. The compression pressure may be in a range of 5-40 psi., and more particularly in a range of 15-30 psi.

Once the decorative covering 12 and substrate 20 have been suitably heated and positioned, the lower first forming mandrel 60 and the upper second forming mandrel 66 may move towards one another and the decorative covering 12 as shown in FIG. 9. More particularly, the lower first forming mandrel 60 may move upwards toward the decorative covering 12 and substantially simultaneously, the upper second forming mandrel 66 may move downwards towards the decorative covering 12. Once the forming mandrels 60, 66 reach a predetermined distance from one another, the vacuum through vacuum passages 62 may be activated and the heated decorative covering 12 may then be vacuum drawn (pulled) onto the substrate 20 as it is simultaneously being pushed towards the substrate 20 by mandrel 66 as the mandrels 60, 66 continue to close towards one another.

Furthermore during the closing operation, the second forming mandrel 66 forms the textured (grained) surface 68 into the upper (front) surface 13 of the skin layer 14, particularly to a grain depth of up to 0.010 inch. To better ensure the textured surface 68 is formed into the upper (front) surface 13 of the skin layer 14, as well as increase the bonding of the decorative covering 12 and the substrate 20 to one another, at full closure the thickness of the cavity 70 between the mandrels 60, 66 should be such that the cushion layer 16 is pressed (compressed) at least 10%, and more particularly compressed in a range of 10% to 50%. In order to provide suitable resistance to compression, the cushion layer 16 should have a compressive strength of 0.40 - 0.45 kg/cm² at an indentation of 50%, measured ASTM D3575-11, Part B. By heating the decorative covering 12 to 320 degrees F, the material temperature is suitable for vacuum forming the sheet and compressive molding to impart a grain depth of up to .010" inch.

Once the adhesive has set, particularly by being cooled below a solidification temperature in the case of a hot-melt, here about a 27 °C (80 °F), the mandrels 60, 66 may be opened relative to one another and decorative article 10 removed from first forming mandrel 60.

As shown by FIG. 9A, the adhesive layer 24 is applied to the lower surface 18 of the decorative covering 12 such that the surface voids 23 are at least partially filled with the adhesive layer 24 and the adhesive layer 24 provides a bonding surface to bond with the substrate 20. In such manner as disclosed above, presence of the surface voids 23 in the upper surface 22 of the substrate 20 do not appear (not visible to the naked eye with 20/20 vision at arm's length) on an upper surface 23 of the skin layer 14 after the decorative article 10 is formed.

In an alternative embodiment, second forming mandrel 66 may further include a plurality of vacuum passages 72 which are in communication with a vacuum chamber 74. Once the forming mandrels 60, 66 reach a predetermined distance from one another, the vacuum through vacuum passages 72 may be activated and the heated decorative covering 12 may then be vacuum drawn (pulled) into the cavity 70. More particularly, as the heated decorative covering 12 is being drawn into the cavity 70, the heated decorative covering 12 is stretched such that the skin layer 14 is brought into contact with the textured surface 68 so as to form into the skin layer 14 a textured surface from the textured surface 68.

As the forming mandrels 60, 66 continue to move towards one another, the substrate 20 enters the cavity 70 such that substrate 20 presses against the decorative covering 12. More particularly, the substrate front surface 22 makes contact with the adhesive layer 24 and thereafter, as the substrate 20 continues to move with the closure of mandrels 60, 66, the substrate 20 compresses the cushion foam (cellular) backing layer 16, which biases the compression force as discussed above.

After forming the textured surface into the skin layer 14 and while the mandrels 60, 66 are fully closed, a vacuum may be applied through mandrel 60, while simultaneously terminating the vacuum through mandrel 66 and applying positive air pressure through mandrel 60, to demold the molded decorative article 10 from the cavity 70.

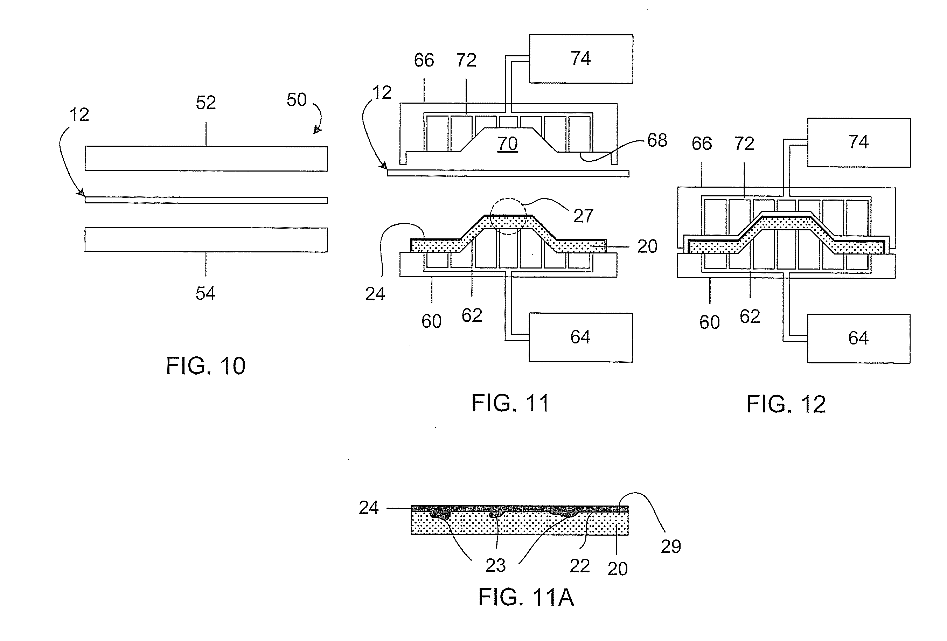

In another alternative embodiment, rather than the decorative covering 12 being coated with the adhesive, the substrate 20 may be coated with adhesive layer 24. More particularly, as best shown in FIG. 11, in order to bond the decorative covering 12 to the substrate 20, the upper (front) surface 22 of the substrate 20 may be coated with adhesive layer 24, such as by being spray applied. As explained in greater detail below, as shown in FIG. 11A, the adhesive 24 should at least partially fill voids 23 in the substrate 20.

The adhesive layer 24 may be applied to the upper (front) surface 22 of the substrate 20 as a heated liquid melt by coating the surface 22 at an amount in a range of 60-120 g/sqm (grams/square meter), and more particularly 60-100 g/sqm. The adhesive layer 24 should be applied in an amount suitable to at least partially fill surface voids 23 (e.g. pinholes, craters) arising in the upper (front) surface 22 of the substrate 20, due to use of the chemical blowing agent, as such will inhibit the defects from reading through and being visible on the skin layer 14 after the decorative article 10 is formed, as well as provide a suitable bond strength between the decorative covering 12 and the substrate 20 which inhibits blisters from forming between the decorative covering 12 and the substrate 20 due to release of internal gas pressure from within the substrate 20 created from the release of gas by the blowing agent. Without being bound to a particular theory, the use of a hot-melt adhesive may allow the thickness of the adhesive layer 24 to vary and flow into the surface voids and fill the voids, which results in providing a bonding surface 29 to bond with the decorative covering 12 which is more level and planar than the upper (front) surface of the substrate 20.

The adhesive, once applied to the upper (front) surface 22 of the substrate 20 may then be cooled on the substrate 20 to a temperature (e.g. room temperature or 20-23 °C) to solidify the liquid melt.

After the substrate 20 has been coated with the adhesive layer 24 and the adhesive layer 24 has been dried, the substrate 20 may then be placed on first forming (male) mandrel 60. As set forth above, first forming mandrel 60 may be understood as a thermoforming/vacuum-forming mandrel and may heat the substrate 20 as may be required for use of the adhesive.

Similar to the earlier embodiment, once the decorative covering 12 has been adequately heated, the decorative covering 12 may be located over substrate 20 between first forming (male) mandrel 60 and opposing second forming (female) mandrel 66. Second forming mandrel 66 may include a textured surface 68, which may include a texture in the form of a leather grain. The textured surface 68 may be used to form a texture, such as a leather grain, into the upper (front) surface 13 of skin layer 14, which may be initially untextured.

In addition to forming a texture into the upper (front) surface 13 of skin layer 14, the second forming mandrel 66 may be used to press the decorative covering 12, adhesive layer 24 and substrate 20 together to increase the bonding of the decorative covering 12 and the substrate 20 to one another.

Also similar to the earlier embodiment, once the decorative covering 12 and substrate 20 have been suitably heated and positioned, the lower first forming mandrel 60 and the upper second forming mandrel 66 may move towards one another, and once the forming mandrels 60, 66 reach a predetermined distance from one another, the vacuum through vacuum passages 62 may be activated and the heated decorative covering 12 may then be vacuum drawn (pulled) onto the substrate 20 as it is simultaneously being pushed towards the substrate 20 by mandrel 66 as the mandrels 60, 66 continue to close towards one another. Furthermore during the closing operation, the second forming mandrel 66 forms the textured surface 68 into the upper (front) surface 13 of the skin layer 14.

Once the adhesive has set, particularly by being cooled below a solidification temperature in the case of a hot-melt, here about a 27 °C (80 °F), the mandrels 60, 66 may be opened relative to one another and decorative article 10 removed from first forming mandrel 60.

As shown by FIG. 11A, the adhesive layer 24 is applied to the lower surface 18 of the decorative covering 12 such that the surface voids 23 are at least partially filled with the adhesive layer 24 and the adhesive layer 24 provides a bonding surface to bond with the substrate 20. In such manner as disclosed above, presence of the surface voids 23 in the upper surface 22 of the substrate 20 do not appear (not visible to the naked eye) on an upper surface 23 of the skin layer 14 after the decorative article 10 is formed.

In yet another embodiment of the disclosure, both the decorative covering 12 and the substrate 20 may be coated with the adhesive 24 prior to joining.

Using the adhesive as described embodiments, after a 24 hour cure, the bond strength between the decorative covering 12 and the substrate 20 may be in range of 800 to 1,000 N/mm (newtons/millimeter), and more particularly in a range of 850 to 950 N/mm as measured by ASTM D903-98(2010), 180 degree peel.

With use of the foregoing process, the substrate 20 may be used in the thermoforming process within 24 hours of injection molding thereof. The adhesive layer 24, in addition to filling small defects (e.g. pinholes, craters and other voids/recesses) in the upper (front) surface 22 of the substrate 20 due to use of the chemical blowing agent, provides a bond line having a bond strength between the decorative covering 12 and the substrate 20 which may inhibit blisters from forming between the decorative covering 12 and the substrate 20 due to release of internal gas pressure from within the substrate 20 created from the release of gas by the blowing agent.

According to one embodiment of the present disclosure, a method of forming a decorative article is provided, with the method comprising providing a decorative covering, the decorative covering comprising a skin layer and a cushion foam layer; providing an injection molded foamed substrate, the substrate formed of at least one thermoplastic polymer, the thermoplastic polymer having a cellular structure formed by a gas expelled into the thermoplastic polymer by a chemical blowing agent mixed with the thermoplastic polymer during injection molding, wherein an upper surface of the substrate includes surface defects including surface voids; applying a hot-melt adhesive to a lower surface of the decorative covering; bonding the decorative covering and the injection molded foamed substrate with the adhesive located on the lower surface of the decorative covering; and wherein the adhesive is applied to the upper surface of the substrate such that presence of the surface voids in the lower surface of the decorative covering do not appear on an upper surface of the skin layer after the decorative article is formed.

According to one embodiment of the present disclosure, a method of forming a decorative article is provided, with the method comprising providing a decorative covering, the decorative covering comprising a skin layer and a cushion foam layer; providing an injection molded substrate, the substrate formed of at least one thermoplastic polymer, the thermoplastic polymer having a cellular structure formed by a gas expelled into the thermoplastic polymer by a chemical blowing agent mixed with the thermoplastic polymer during injection molding; applying a hot-melt adhesive to an upper surface of the substrate, wherein the upper surface of the substrate includes surface defects including surface voids; bonding the decorative covering and the injection molded foamed substrate with the adhesive located on the upper surface of the substrate; and wherein the adhesive is applied to the upper surface of the substrate such that presence of the surface voids in the upper surface of the substrate do not appear on an upper surface of the skin layer after the decorative article is formed.

While a preferred embodiment of the present invention(s) has been described, it should be understood that various changes, adaptations and modifications can be made therein without departing from the spirit of the invention(s) and the scope of the appended claims. The scope of the invention(s) should, therefore, be determined not with reference to the above description, but instead should be determined with reference to the appended claims along with their full scope of equivalents. Furthermore, it should be understood that the appended claims do not necessarily comprise the broadest scope of the invention(s) which the applicant is entitled to claim, or the only manner(s) in which the invention(s) may be claimed, or that all recited features are necessary.

## Claims

1. A method of forming a decorative article, the method comprising:
providing a decorative covering, the decorative covering comprising a skin layer and a cushion foam layer;
providing an injection molded foamed substrate, the substrate formed of at least one thermoplastic polymer, the thermoplastic polymer having a cellular structure formed by a gas expelled into the thermoplastic polymer by a chemical blowing agent mixed with the thermoplastic polymer during injection molding, wherein an upper surface of the substrate includes surface defects including surface voids;
providing a hot-melt adhesive between a lower surface of the decorative covering and the upper surface of the substrate;
bonding the decorative covering and the injection molded foamed substrate with the adhesive; and
wherein the adhesive is applied between the lower surface of the decorative covering and the upper surface of the substrate such that the surface voids are at least partially filled with the adhesive and the adhesive provides a bonding surface to bond with the substrate.

2. The method of claim 1 wherein:
providing a hot-melt adhesive between a lower surface of the decorative covering and the upper surface of the substrate comprises applying the hot-melt adhesive to at least one of a lower surface of the decorative covering and the upper surface of the substrate.

3. The method of claim 2 wherein:
applying the hot-melt adhesive to at least one of the lower surface of the decorative covering and the upper surface of the substrate comprises applying the hot melt adhesive to at least the lower surface of the decorative covering.

4. The method of one of the preceding claims wherein:
the adhesive is present between the lower surface of the decorative covering and the upper surface of the substrate in an amount of at least 60 grams/square meter.

5. The method of one of the preceding claims wherein:
the adhesive forms an adhesive bond between the decorative covering and the injection molded foamed substrate having an adhesive bond strength of at least 800 N/mm when tested in accordance with ASTM D903-98(2010).

6. The method of one of the preceding claims wherein:
applying the hot-melt adhesive comprises roll coating or spraying the hot melt adhesive onto the lower surface of the decorative covering.

7. The method of one of the preceding claims wherein:
bonding the decorative covering and the injection molded foamed substrate is performed at least in part by drawing the decorative covering onto the injection molded foamed substrate with a vacuum.

8. The method of one of the preceding claims wherein:
bonding the decorative covering and the injection molded foamed substrate is performed at least in part by pressing the decorative covering and the injection molded foamed substrate together.

9. The method of one of the preceding claims further comprising:
forming a texture in an upper surface of the skin layer during bonding of the decorative covering and the injection molded foamed substrate.

10. The method of one of the preceding claims wherein:
the thermoplastic polymer has a cellular structure formed by the gas expelled into the thermoplastic polymer by the chemical blowing agent mixed with the thermoplastic polymer during injection molding.

11. The method of one of the preceding claims wherein:
the chemical blowing agent is mixed with the thermoplastic polymer during injection molding by mixing pellets containing nanoparticles of the chemical blowing agent with the thermoplastic polymer.

12. The method of one of the preceding claims wherein:
the adhesive is present between the lower surface of the decorative covering and the upper surface of the substrate in an amount in a range of 60 grams/square meter to 120 grams/square meter.

13. A decorative article, comprising:
a decorative covering, the decorative covering comprising a skin layer and a cushion foam layer;
an injection molded foamed substrate, the substrate formed of at least one thermoplastic polymer, the thermoplastic polymer having a cellular structure formed by a gas expelled into the thermoplastic polymer by a chemical blowing agent mixed with the thermoplastic polymer during injection molding;
a hot-melt adhesive between a lower surface of the decorative covering and the upper surface of the substrate;
wherein the decorative covering and the injection molded foamed substrate are bonded with the adhesive;
wherein the adhesive is present between the lower surface of the decorative covering and the upper surface of the substrate in an amount of at least 60 grams/square meter; and
wherein an adhesive bond between the decorative covering and the injection molded foamed substrate has an adhesive bond strength of at least 800 N/mm when tested in accordance with ASTM D903-98(2010).

14. A decorative article, comprising:
a decorative covering, the decorative covering comprising a skin layer and a cushion foam layer;
an injection molded foamed substrate, the substrate formed of at least one thermoplastic polymer, the thermoplastic polymer having a cellular structure formed by a gas expelled into the thermoplastic polymer by a chemical blowing agent mixed with the thermoplastic polymer during injection molding, wherein an upper surface of the substrate includes surface defects including surface voids;
a hot-melt adhesive between a lower surface of the decorative covering and the upper surface of the substrate;
wherein the decorative covering and the injection molded foamed substrate are bonded with the adhesive; and
wherein the adhesive is applied between the lower surface of the decorative covering and the upper surface of the substrate such that the surface voids are at least partially filled with the adhesive and the adhesive provides a bonding surface to bond with the substrate.

15. The decorative article of claim 13 or 14, wherein
the skin layer of the decorative article includes a texture in an upper surface thereof, the texture being formed during bonding of the decorative covering and the injection molded foamed substrate.
